Europäisches Patentamt

European Patent Office

Office européen des brevets

(11) Veröffentlichungsnummer: **0 153 473 B1**

(19)

(12) # EUROPÄISCHE PATENTSCHRIFT

(45) Veröffentlichungstag der Patentschrift: **28.08.91**

(51) Int. Cl.⁵: **B23P 15/10**

(21) Anmeldenummer: **84115436.2**

(22) Anmeldetag: **14.12.84**

(54) **Gegossener Aluminiumkolben für Verbrennungsmotoren mit oberflächlich mechanisch verdichteten Nabenbohrungen.**

(30) Priorität: **11.02.84 DE 3404903**

(43) Veröffentlichungstag der Anmeldung:
**04.09.85 Patentblatt 85/36**

(45) Bekanntmachung des Hinweises auf die
Patenterteilung:
**28.08.91 Patentblatt 91/35**

(84) Benannte Vertragsstaaten:
**DE FR GB IT**

(56) Entgegenhaltungen:
**FR-A- 2 258 457**
**FR-A- 2 374 139**
**US-A- 1 822 877**
**US-A- 3 473 209**

(73) Patentinhaber: **MAHLE GMBH**
**Pragstrasse 26-46 Postfach 50 07 69**
**W-7000 Stuttgart 50(DE)**

(72) Erfinder: **Köhnert, Hans-Jürgen**
**Christophstr. 41**
**W-7057 Winnenden(DE)**

(74) Vertreter: **Pfusch, Volker, Dipl.-Ing.**
**MAHLE GMBH Patentabteilung Pragstrasse**
**26-46 Postfach 50 07 69**
**W-7000 Stuttgart 50(DE)**

**Beschreibung**

Die Erfindung betrifft einen gegossenen Aluminium-Kolben für Verbrennungsmotoren nach dem Oberbegriff des Anspruchs 1.

Es ist bekannt, z.B. aus FR-A-2374139 das gegossene Aluminiummaterial in den Nabenbohrungen längs deren Umfangfläche mechanisch oberflächlich zu verdichten. Dieses Verdichten erfolgt durch aufweitendes Walzen bei Raumtemperatur des Kolbens. Durch ein solches Verdichten läßt sich die Festigkeit des Aluminiummaterials im Bereich der Nabenbohrungsoberfläche erhöhen, d.h. die Nabenbohrungen können dadurch in ihrer Sicherheit gegenüber an der Nabenbohrung ausgehenden Nabenrissen erhöht werden. Bei relativ hohen Kolbenbelastungen haben sich die bisherigen Maßnahmen zur Erhöhung der Nabenrißfestigkeit jedoch als nicht ausreichend erwiesen.

Hiervon ausgehend liegt der Erfindung die Aufgabe zugrunde, die Nabenbohrungen noch sicherer gegen Nabenrisse auszulegen.

Gelöst wird diese Aufgabe durch eine Ausbildung des Aluminiummaterials im Bereich der Nabenbohrungsumfangsfläche nach den Merkmalen des kennzeichnenden Teils des Anspruchs 1.

Erreicht kann diese Ausbildung insbesondere durch ein Verfahren werden, bei der das Aluminium- bzw. Aluminiumlegierungsgefüge durch ein Walzen bei einer Temperatur von mindestens 350 Grad Celsius, vorzugsweise über 400 Grad Celsius erfolgt, wobei die Nabenbohrung gleichzeitig im Durchmesser um einen Betrag von 0,2 - 0,5 mm aufgeweitet wird.

Einen optimalen Zustand der Nabenbohrung für die erfindungsgemäße Bearbeitung läßt sich dadurch erzielen, daß die Gefügeverformung durch Walzen an dar bereits vorgedrehten jedoch noch mit einer Bearbeitungszugabe versehenen Nabenbohrung erfolgt, wobei das radiale Maß der Bearbeitungszugabe derart vorgegeben ist, daß nach dem Walzen über die gesamte Länge und den gesamten Umfang der Nabenbohrung eine Materialabtragung in die verformte Zone des Aluminiummaterials hinein erfolgen kann.

Die Erklärung für den erfindungsgemäß erzielbaren Erfolg ist in folgendem zu sehen.

Das eingangs zum Stand der Technik genannte Kaltverdichten der Oberfläche der Nabenbohrungen durch Walzen bewirkt in einer äußerst geringen Oberflächentiefe Druckeigenspannungen. Wenn diese Druckeigenspannungen nicht übermäßig hoch sind, können sie sich durchaus positiv auf die Nabenfestigkeit auswirken. Daher wird in der Praxis bisher auch sehr häufig von dieser Methode Gebrauch gemacht. Bei extrem hohen Belastungen hat sich jedoch herausgestellt, daß die gewünschte und erhoffte Festigkeitssteigerung nicht eintritt.

Eine Erklärung hierfür gab es bisher allerdings nicht. Deshalb gilt in der Praxis das sog. Kalt-Walzverdichten immer noch als eine der gängigen Methoden zur Steigerung der Nabenfestigkeit.

Mit dem Wissen nach der vorliegenden Erfindung beruht der Wirkverlust der bisherigen Maßnahmen bei extrem hoher Belastung auf folgendem Umstand. Erreicht das Material in den Naben des Kolbens Temperaturen zwischen 200° und 250°C, so beginnt die kaltverformte Gefügestruktur durch Rekristallisation bzw. Erholungsprozesse recht stark zu wachsen. Es handelt sich dabei um eine Gefügeumwandlung. Damit nimmt das Volumen des verdichteten Bereiches zu. Als Folge bilden sich zu den eingebrachten Druckeigenspannungen noch zusätzliche durch das Wachsen bedingte Druckeigenspannungen aus. Diese können sehr hohe Werte erreichen. Dies führt dann schließlich dazu, daß die insgesamt in der verdichteten Zone auftretenden Druckeigenspannungen sich so hoch aufsummieren, daß Schubspannungsrisse entstehen.

Dieser Mechanismus ist vor allem bei AlSi-Legierungen besonders stark ausgeprägt. Ist das Material infolge zu hoher Druckeigenspannungen, wie sie im Motorbetrieb bei hohen Temperaturen auftreten, gefügemäßig einmal bereits vorgeschädigt, dann treten die eigentlich durch ein Kaltverdichten zu vermeidenden Nabenrisse im Prinzip noch eher auf als in unverdichtetem Material.

Bei der erfindungsgemäßen Lösung wird daher eine Kaltverfestigung der Oberflächenzone in den Nabenbohrungen nicht vorgenommen. Es erfolgt vielmehr ein Walzen der Oberfläche unter einer erhöhten Temperatur, bei der die Gefügestruktur ohne das Einbringen von Eigenspannungen verändert werden kann. Auf diese Weise läßt sich in ausreichender Tiefe des Materials der Faserverlauf in Umfangsrichtung, d. h. jeweils tangential zu dieser, ausrichten. Dies ist praktisch eine plastische Verformung in Umfangsrichtung. Dieser umfangsmäßig ausgerichtete Faserverlauf bewirkt nach der Erfindung die angestrebte Festigkeitserhöhung, die auch bei Materialtemperaturen zwischen 200° und 250°C ihre Wirkung nicht verliert. Dies beruht im wesentlichen darauf, daß bei der unter Wärme erfolgten Verdichtung bei gleichzeitiger Faserausrichtung keine Druckeigenspannungen in das Material eingebracht werden.

Ein Ausführungsbeispiel der Erfindung wird nachfolgend beschrieben.

Bei einem gegossenen Kolben aus einer AlSi-Legierung werden die Nabenbohrungen vorgedreht auf einen Durchmesser der um etwa 0,4 mm kleiner als der Durchmesser der fertigbearbeiteten Nabenbohrung ist. Die vorgedrehte Nabenbohrung wird bei einer Temperatur von 450°C durch Walzen um einen Betrag von 0,2 mm im Durchmesser aufgeweitet. Die Verformungszone, innerhalb der das Gefüge der Aluminium-Legierung in Umfangsrichtung der Nabenbohrung ausgerichtet wird, d. h. in dem ein in Umfangsrichtung der Nabenbohrung ausgerichteter Faserverlauf erzeugt wird, mißt in radialer Tiefe etwa 0,35 mm. Danach wird die Nabenbohrung auf Fertigmaß gedreht. Die Nachbearbeitung der Nabenbohrung nach dem Walzen ist erforderlich, da die Aufweitung über die Länge der Nabenbohrung unterschiedlich ist, d. h. die Nabenbohrung weitet sich an den Enden stärker als in der Mitte auf.

## Patentansprüche

1. Aluminiumkolben aus einem gegossenen Aluminiumlegierungsmaterial für Verbrennungsmotoren, bei dem das Aluminiumlegierungsmaterial an den inneren Umfangsflächen der Nabenbohrungen auf einer radialen Tiefe von mindestens 0,1 mm mechanisch durch Oberflächenbehandlung verdichtet ist,
dadurch **gekennzeichnet,** daß das Aluminiumlegierungsmaterial eine Al-Si-Legierung ist,
daß das Gefüge des Legierungsmaterials frei von Druckeigenspannungen ist und in radialer Tiefe von mindestens 0,1 mm, vorzugsweise 0,2 mm, einen un Umfangsrichtung der Nabenbohrung ausgerichteten Faserverlauf aufweist.

## Claims

1. Aluminium piston of a cast aluminium alloy material for internal combustion engines, wherein the aluminium alloy material is mechanically compacted by surface treatment on the inner circumferential surfaces of the boss bores to a radial depth of at least 0.1 mm. characterized in that the aluminium alloy material is an Al-Si-alloy, that the structure of the alloy material is free from residual compressive stresses and possesses a grain flow orientated in the circumferential direction of the boss bore to a radial depth of at least 0.1 mm, preferably 0.2 mm.

## Revendications

1. Piston d'aluminium pour moteurs à combustion interne, composé d'un alliage d'aluminium coulé, sur lequel l'alliage d'aluminium est densifié par un traitement superficiel mécanique, sur une profondeur radiale de 0,1 mm au moins, sur les surfaces périphériques internes des alésages de l'axe, caractérisé en ce que l'alliage d'aluminium est un alliage Al-Si, et en ce que la structure de l'alliage est exempte de contraintes de pression internes, et présente un fibrage dans le sens périphérique de l'alésage de l'axe, sur une profondeur radiale de 0,1 mm au moins, de 0,2 mm de préférence.